Europäisches Patentamt

European Patent Office

Office européen des brevets

(19)

(11) Numéro de publication: **0 332 573**
**A1**

(12) # DEMANDE DE BREVET EUROPEEN

(21) Numéro de dépôt: **89810127.4**

(51) Int. Cl.4: **A 21 D 13/08**

(22) Date de dépôt: **17.02.89**

(30) Priorité: **09.03.88 CH 877/88**

(43) Date de publication de la demande:
**13.09.89 Bulletin 89/37**

(84) Etats contractants désignés:
**AT BE CH DE ES FR GB GR IT LI LU NL SE**

(71) Demandeur: **Buhlmann, Gilbert**
**Gros Praz**
**CH-1631 Cresuz-Chatel s/Montsalvens (CH)**

(72) Inventeur: **Buhlmann, Gilbert**
**Gros Praz**
**CH-1631 Cresuz-Chatel s/Montsalvens (CH)**

(74) Mandataire: **Dousse, Blasco et al**
**7, route de Drize**
**CH-1227 Carouge/Genève (CH)**

(54) **Composition pour la fabrication de meringues.**

(57) Cette composition contient de la mousse de blanc d'oeuf et du sucre non raffiné. Les substances naturelles non sucrantes de ce sucre jaune à roux sont maintenues entre certaines limites.

EP 0 332 573 A1

Bundesdruckerei Berlin

## Description

### COMPOSITION POUR LA FABRICATION DE MERINGUES

La présente invention concerne une composition utilisable dans la fabrication des meringues et comprenant une mousse de blanc d'oeuf battu et du sucre.

On sait que pour fabriquer des meringues suivant les moyens traditionnels, on mélange des blancs d'oeuf battus en neige avec du sucre de canne ou de betterave cristallisé raffiné. On met en forme le mélange et on cuit ces formes 1-1½ h. à feu doux (110°C environ), de manière à évaporer complètement l'eau contenue dans le mélange et à solidifier celui-ci.

Pour que les formes réalisées avec le mélange cru ne s'affaissent pas à la cuisson, il faut que le sucre présent constitue une sorte de feutrage, ou réseau, dans la masse de manière à la rendre thixotropique et à l'empêcher de couler sous l'effet de la chaleur. Il est donc nécessaire que le sucre incorporé à l'état solide à la mousse de blancs d'oeuf battus ne se dissolve pas complètement, à la chaleur, dans l'eau de cette mousse. Pour cette raison, d'une part, la quantité d'eau mise en jeu ne devrait pas dépasser environ 85 à 90% en poids dudit blanc d'oeuf (pris à l'état sec) et, d'autre part, la quantité d'albumine présente devrait être d'au moins 10%.

Ces exigences se réalisant dans les conditions habituelles c'est-à-dire lors de l'utilisation de blancs d'oeuf frais à 10-13% de matières sèches et de sucre de canne ou de betterave cristallisé rattiné. Il n'en va cependant pas de même si on utilise du sucre de canne non raffiné dans le but de réaliser des meringues plus naturelles ou à propriétés diététiques. En effet, le sucre non raffiné contient toujours une certaine proportion de mélasse (laquelle contient des matières azotées et des minéraux hydrosolubles) qui le rend hygroscopique et qui provoque sa dissolution rapide dans l'eau du blanc d'oeuf lors de son mélange avec la mousse de celui-ci. L'effet "rigidifiant" du sucre vis-à-vis de la mousse de blanc d'oeuf disparaît donc rapidement à la chaleur et les meringues ainsi réalisées perdent leur fermeté au formage et en début de cuisson, les formes initiales s'affaissent et donnent des produits informes et inutilisables en pâtisserie.

La composition suivant l'invention permet de remédier à ces inconvénients. Il est à noter que pour des taux de matières azotées, par exemple, protéines, et de matières minérales inférieurs aux valeurs ainsi indiquées, les meringues conservent, lors de la cuissson, toute leur rigidité mais leur teinte est alors trop pâle et leur goût trop fade, et les rapproche trop des meringues habituelles au sucre pur pour qu'on puisse les considérer comme meringues naturelles au sucre non raffiné.

Par ailleurs, avec des proportions de protéines et de matières minérales supérieures aux valeurs indiquées, les meringues perdent leur rigidité en début de cuisson, à moins que le blanc d'oeuf utilisé ne contienne une quantité d'eau nettement inférieure aux normes susmentionnées, par exemple inférieure à 80%, ce qui nécessiterait une déshydratation. Il est aussi à remarquer que pour fabriquer des meringues à vocation diététique et naturelle, il est préférable d'utiliser des blancs d'oeuf frais dont la teneur en eau est de 12 à 13%, la poudre de blancs d'oeuf (albumine en poudre) ne présentant pas les mêmes qualités. A ce sujet, on peut noter que le blanc d'oeuf frais contient une proportion notable de glucose (qui est généralement éliminée au cours du procédé de dessication); ce glucose participe aux réactions se déroulant lors de la cuisson des meringues et leur conférant un aspect coloré et certaines propriétés organoleptiques très appréciés. Avec le blanc d'oeuf en poudre, ces propriétés n'apparaissent pas.

Au cours des travaux ayant permis la réalisation de la présente composition, le présent inventeur a encore découvert que, de préférence, la dimension moyenne des cristaux de sucre utilisé était comprise entre 0,1 et 1 mm. En effet, si cette dimension moyenne est inférieure à 0,1 mm, l'effet de dissolution de ces grains est trop marqué et la proportion de ceux qui restent (et qui contribuent à la rigidité de la mousse) devient insuffisante; en contrepartie, si la dimension moyenne des grains dépasse nettement 1 mm, le nombre de ceux-ci devient insuffisant pour assurer cette fonction de renforcement de la mousse de blanc d'oeuf battu. A ce sujet, on notera que la quantité de sucre qu'on ajoute lors de la préparation de la présente composition est de préférence comprise entre 150 et 300 g pour 100 à 200 g de mousse de blanc d'oeuf. Il est préférable que le taux d'humidité de ce sucre ne dépasse pas 1% environ.

De préférence, on utilise comme sucre non raffiné un sucre dit "de première cristallisation", c'est-à-dire un sucre qui n'est pas totalement brut (c'est-à-dire issu directement du jus de canne à sucre), mais qui résulte d'un premier "jet" de cristallisation. Il s'agit d'un sucre de couleur jaune à brune dont les cristaux ont, en moyenne, de 0,5 à 0,8 mm et dont le taux d'humidité est inférieur à 1%.

L'exemple suivant illustre l'invention

### Exemple

On a battu en neige 200 g de blanc d'oeuf obtenus à partir d'oeufs frais et on y a mélangé 280 g de sucre roux contenant:

| | |
|---|---|
| saccharose | 99,3 % |
| eau | 0,12 % |
| minéraux hydrosolubles | 0,18 % |
| substances azotées hydrophiles | 0,075% |

On a ainsi obtenu une composition suivant l'invention.

Au moyen d'une douille, on a dressé les meringues sur un fond de papier huilé et on a passé le tout 1½ h. au four à circulation d'air (108-112°C).

On a ainsi obtenu des meringues solidifiées parfaitement formées, aux angles aigus, de couleur beige légèrement plus foncée que celle des meringues traditionnelles. Ces meringues avaient un goût excellent.

**Revendications**

1. Composition pour la réalisation de meringues constituée d'un mélange homogène de mousse de blanc d'oeuf battu en neige et de sucre de canne non-raffiné, caractérisée en ce que le contenu en poids de ce sucre en substances azotées et minéraux hydrosolubles d'origine naturelle est de 0,05 à 0,35% et 0,15 à 0,6%, respectivement.

2. Composition suivant la revendication 1, caractérisée en ce que la dimension moyenne des cristaux de sucre est de 0,1 à 1 mm.

3. Composition suivant la revendication 1, caractérisée en ce que le taux d'humidité du sucre ne dépasse pas 1%.

4. Composition suivant la revendication 1, caractérisée en ce que le blanc d'oeuf contient 12 à 13% de matières protéiques.

5. Composition suivant la revendication 2, caractérisée en ce que la couleur du sucre est jaune à brune.

6. Composition suivant la revendication 2, caractérisée en ce que le sucre est de première cristallisation.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 708 589   (RUBICON GmbH)<br>--- | | A 21 D   13/08 |
| A | FR-A-1 239 567   (THE AMERICAN SUGAR REFINING CO.)<br>--- | | |
| A | CHEMICAL ABSTRACTS, vol. 95, no. 5, 3 août 1981, page 594, résumé no. 41053z, Columbus, Ohio, US; & SU-A-820 783 (ALL-UNION SCIENTIFIC-RESEARCH INSTITUTE OF THE CONFECTIONARY INDUSTRY) 15-04-1981<br>--- | | |
| A | US-A-3 338 721   (F.D. SCHOONOVER)<br>----- | | |

**DOMAINES TECHNIQUES RECHERCHES (Int. Cl.4)**

A 21 D
C 13 F

Le présent rapport a été établi pour toutes les revendications

| Lieu de la recherche | Date d'achevement de la recherche | Examinateur |
|---|---|---|
| LA HAYE | 14-04-1989 | COUCKE A.O.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)